Europäisches Patentamt

European Patent Office

Office européen des brevets

(19)

(11) Publication number: **0 036 675**
**A1**

(12) **EUROPEAN PATENT APPLICATION**

(21) Application number: **81200135.2**

(22) Date of filing: **04.02.81**

(51) Int. Cl.³: **B 60 R 7/00**

(43) Date of publication of application: **30.09.81**
**Bulletin 81/39**

(71) Applicant: **Slavoljub-Buca, Stojanovic, Jan van**
**Galenstrasse 103, NL-1056 BK Amsterdam (NL)**

(84) Designated Contracting States: **DE FR GB IT SE**

(72) Inventor: **Slavoljub-Buca, Stojanovic, Jan van**
**Galenstrasse 103, NL-1056 BK Amsterdam (NL)**

(54) **Removable car's umbrella as a personal protection against rain and as a reclame and prestige item.**

(57) The umbrella is printed or painted (8) and put in a storage compartment (1) fitted in a part of a car's body beneath the door. The compartment comprises a ventilation hose (2) a water escape hose (3) and a locking mechanism (4).

EP 0 036 675 A1

0036675

REMOVABLE CAR'S UMBRELLA AS A PERSONAL PROTECTION
AGAINST RAIN AND AS A RECLAME AND PRESTIGE ITEM.

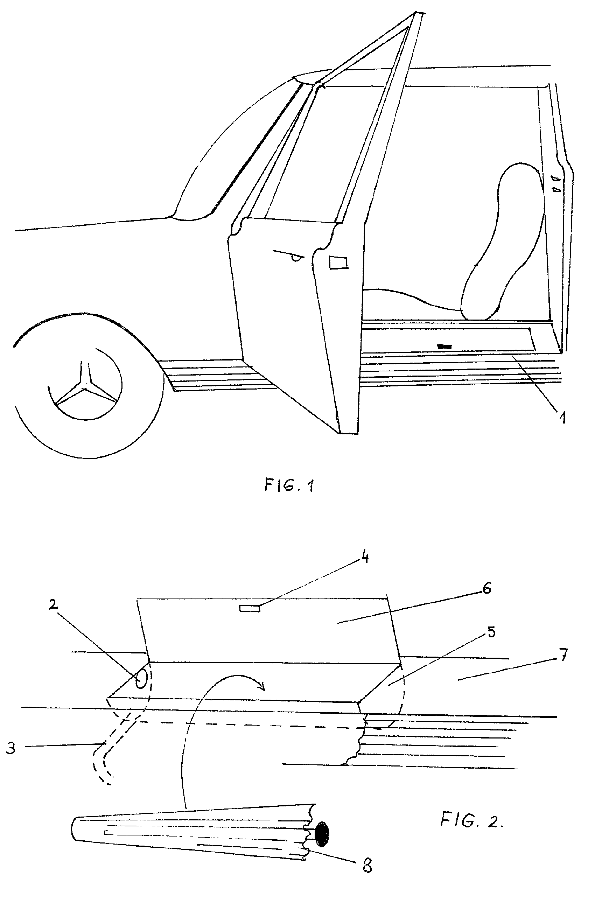

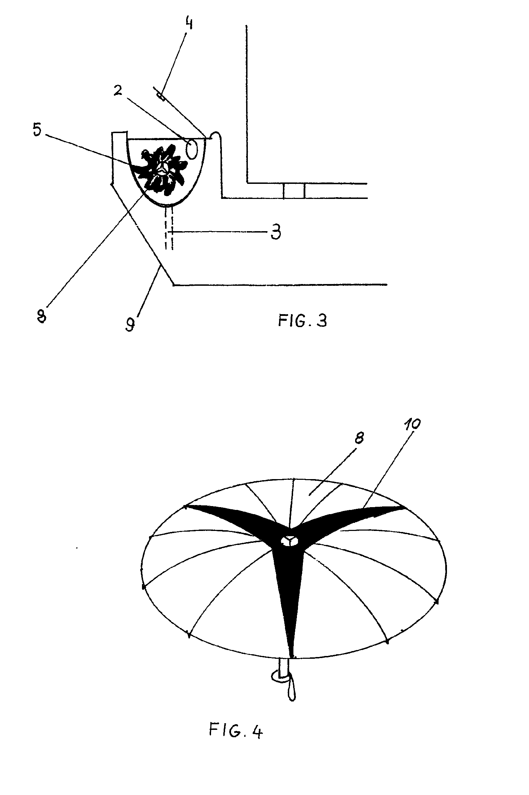

That employs an umbrella with a painted sign from car
manufacturer (or printed) ,and built ina car place to store it,
the example of that idea can be observed on a FIG.1.

ITEMS

1. Suggested position of storage compartment for the umbrella.

2. Ventilation hose

3. Water escape hose.

4. Locking mechanism.

5. Plasic bed for the umbrella.

6. Lid.

7. Part of carrosserie beneath the door.

8. Umbrella with a painted manufacturer's sign on it.

9. Outer side

10. Suggested position of manufacturer's sign.

ACTION

After opening the door is possible to unlock 4 and open 6 so
that you can take out 8 that protects from rain.

. ADVANTAGES

At present no car has a built in umbrella that is out of the
way when you don't need it and at hand when you need it.
This system eliminates problem of storage, humidity, and it
is practical.

0036675

-1-

PATENT CLAIMS

1. THE WAY TO KEEP UMBRELLA IN A CAR THAT EMPLOYS
   SPECIAL DESIGN* FOR IT IN A CAR'S CAROSERIE OR
   INTERIOR OF WHICH IS ONE EXAMPLE SHOWN ON PICTURE
   1. ,OR ANY OTHER WAY OF STORING THE SAID UMBRELLA
   THAT EMPLOYS ABOVE SAID DESIGN FOR TO KEEP IT IN
   ANY PART OF A CAR.

2. PRINTING OR PAINTING OF AN UMBRELLA THAT IS PERMANENTLY USED IN A CAR OF CERTAIN BRAND, WITH THE
   NAME AND SIGN OF THE SAME BRAND AS A MEANS OF
   ADVERTISING OR AESTETIC DECORATION.

( by "special design" is meant specific type of
construction of place for the storage  of the said
umbrella,that employs altering of existing design
of caroserie or interior of a car)

FIG. 1

FIG. 2.

FIG. 3

FIG. 4

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | B 60 R 7/00 |
| X | FR - A - 2 449 420 (MARENCO) <br> * the whole document * <br> -- | 1 | |
| X | FR - A - 2 333 671 (LE SAINT) <br> * the whole document * <br> -- | 1 | |
| X | US - A - 3 081 126 (THEBERGE) <br> * the whole document * <br> -- | 1 | |
| | GB - A - 1 200 080 (GARGANO) <br> * claims 1-5 * <br> -- | 1 | |
| | DE - B - 1 094 132 (FAUT) <br> * claims 1-6 * <br> ------ | 1 | |

TECHNICAL FIELDS SEARCHED (Int. Cl.³)

B 60 R

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search The Hague | Date of completion of the search 07-04-1981 | Examiner SCHMITTER |
|---|---|---|

EPO Form 1503.1 06.78